# EUROPEAN PATENT SPECIFICATION

(11) **EP 1 523 837 B1**
(45) Date of publication and mention of the grant of the patent: **10.10.2007**
(21) Application number: 03739916.9
(22) Date of filing: 03.07.2003
(51) Int. Cl.: H04L 12/58, H04Q 7/22, H04L 29/06

(54) **METHOD AND SYSTEM FOR CONTROLLING MESSAGES IN A COMMUNICATION NETWORK**
VERFAHREN UND VORRICHTUNG ZUR VERARBEITUNG VON NACHRICHTEN IN EINEM KOMMUNIKATIONSNETZWERK
PROCEDE ET SYSTEME DE GESTION DES MESSAGES DANS UN RESEAU DE COMMUNICATION

(30) Priority: 11.07.2002 US 192504
(43) Date of publication of application: 20.04.2005
(73) Proprietor: Airwide Solutions Inc., Kanata, ON K2K 3G4 (CA)
(72) Inventor: WANG, Jiwei, R., Kanata, Ontario K2K 3L5 (CA); KADAR, Vincent, Kanata, Ontario K2K 3H6 (CA)
(74) Representative: Lohr, Georg
(86) International application number: PCT/CA2003/000989
(87) International publication number: WO 2004/008701

(56) References cited:
- EP-A- 0 946 022
- GB-A- 2 343 529
- US-A- 6 101 393
- US-A1- 2002 013 902

## Description

### Technical Field

The present invention relates to the field of controlling messages in a communication network. More particularly to controlling messages, including unsolicited or unwanted (a.k.a. junk or spam) messages, being sent to subscribers based on the identity of the sender and receiver specified criteria

### Background Art

Mobile communication networks which provide messaging capability (e.g. Short Message Service (SMS) and Multimedia Message Services (MMS)) are experiencing a junk message phenomena analogous to the junk email or "Spam" problem occurring with respect to email on the public Internet. Various parties are sending numerous unsolicited messages to large numbers of users of mobile devices. Most of these messages are effectively a form of advertising or solicitation. As is the case on the Internet, most mobile device users are not interested in receiving these unsolicited junk messages.

The effect of the large volume of junk messages is to consume considerable resources (e.g. bandwidth, storage capacity, etc.) belonging to the network operator and the end users. This has substantial negative financial and operational impacts for both the operator and the end users.

Junk email control systems that have been deployed on the Internet have generally been only partially effective. A variety of techniques have been tried including: Spam alert (e.g. Mail Abuse Prevention System and Open Relay Behavior-Modification System), email pattern analyses, rules based filtering (e.g. Lyris^{™} MailShield^{™}), and industry regulatory bodies (e.g. Truste^{™}). Most are not entirely effective at detecting and removing/redirecting junk email, they inadvertently remove/redirect legitimate email, some are easily circumvented by 'Spoofing' (where the sender masquerades as someone else by illicitly substituting someone else's identity as the message sender) and many require direct operator and/or user intervention to assure correct ongoing operation. These solutions would not be expected to be any more effective at addressing the junk message problem if they were applied to junk messages in the mobile communications network.

GB-A-2 343 529 discloses an email spam filtering method, according to which a sender sends an email to a receiver. The sender includes a token with the email. The receiver then replies to this email or sends later emails, attaching the same token to his emails. Emails to the sender, which do not include the token are recognized as unsolicited emails and thus considered as spam mails. Emails that include the token are processed in accordance with the validity of the token. Tokens sent by the sender to the receiver can be valid either for one email, a fixed number of emails or an undefined number of emails. If the sender receives an email containing a token, the sender's email client checks whether the token is (still) valid. If the token is not valid, the email is processed as a spam mail, if the token is valid the email is delivered to an infolder.

### Disclosure of Invention

In accordance with one aspect of the present invention, a method of processing a message sent by an authenticatable sender to a receiver in a communication network comprising: (a) designating a message as rejected when the sender matches a rejection criteria, (b) designating a message as trusted when the sender matches an acceptance criteria, (c) designating a message as untrusted when the sender matches neither a rejection criteria nor an acceptance criteria, (d) designating a message as untrusted when the sender fails authentication, (e) forwarding the designated rejected message to a message receptacle, (f) forwarding the designated trusted message for delivery to the receiver, and (g) forwarding the designated untrusted message for delivery to the receiver.

In accordance with another aspect of the present invention, a system for processing a message sent by an authenticatable sender to a receiver in a communication network comprising: a white-list repository providing for administration of a plurality of acceptance criteria; a black-list repository providing for administration of a plurality of rejection criteria; and a processing agent providing for: (a) designating a message as rejected when the sender matches a rejection criteria, (b) designating a message as trusted when the sender matches an acceptance criteria, (c) designating a message as untrusted when the sender matches neither a rejection criteria nor an acceptance criteria, (d) designating a message as untrusted when the sender fails authentication, (e) forwarding the designated rejected message to a message receptacle, (f) forwarding the designated trusted message for delivery to the receiver, and (g) forwarding the designated untrusted message for delivery to the receiver.

In accordance with yet another aspect of the present invention, a computer program product for processing a message sent by an authenticatable sender to a receiver in a communication network, the computer program product comprising: computer readable program code devices for: (a) designating a message as rejected when the sender matches a rejection criteria; (b) designating a message as trusted when the sender matches an acceptance criteria; (c) designating a message as untrusted when the sender matches neither a rejection criteria nor an acceptance criteria; (d) designating a message as untrusted when the sender fails authentication; (e) forwarding the designated rejected message to a message receptacle, (f) forwarding the designated trusted message for delivery to the receiver, and (g) forwarding the designated untrusted message for delivery to the receiver.

Other aspects and features of the present invention will become apparent to those ordinarily skilled in the art upon review of the following description of specific embodiments of the invention in conjunction with the accompanying figures.

### Brief Description of Drawings

The present invention will be described in conjunction with the drawings in which:
Fig. 1 represents an environment in which an exemplary embodiment of the present invention is deployed.
Fig. 2 represents an example embodiment of the Message Control System of the present invention.
Fig. 3 represents a flow-chart of the steps in an exemplary embodiment of the message processing method of the present invention.
Fig. 4 represents an example of a suitable computing environment in which the present invention may be implemented.

### Best Modes for Carrying Out the Invention

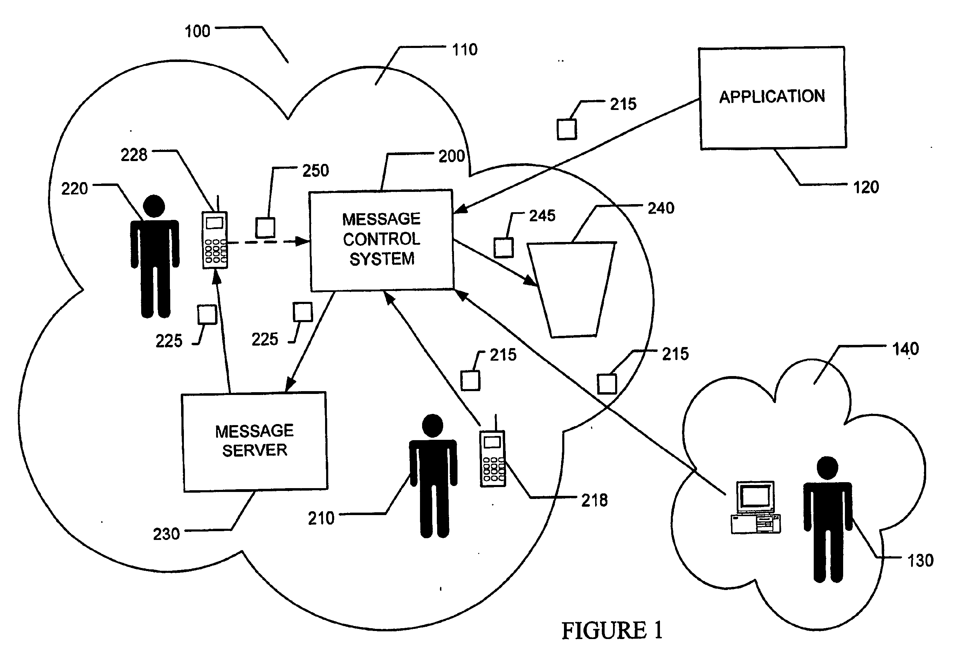

Fig. 1 and the associated description represent an environment 100 in which an exemplary embodiment of the Message Control System (MCS) 200 of the present invention is deployed. The MCS 200 provides for the controlling of unwanted (junk) messages based on the identity of the message senders and on the preferences of the message receivers. A communication network 110 provides the infrastructure to enable, for example, a subscriber (the sender) 210 of the network 110 to send originating messages 215 destined for another subscriber (the receiver) 220 of the network. Originating messages 215 sent by the sender 210 pass through the MCS 200 where they are transformed into processed messages 225. The processed messages 225 are sent to a message server 230 or other similar device. The receiver 220 can access the processed messages 225 from the message server 230. The sender 210 uses a terminal device 218 to send originating messages 215 and the receiver 220 uses a terminal device 228 to receive processed messages 225. The terminal devices 218, 228 are of a type capable of sending and receiving messages 215, 225 such as a digital cellular phone, two-way pager, wireless modem equipped personal computing device or other similar devices.

In addition to the sender 210, the originating messages 215 can also, for example, come from a Value Added Service Provider (VASP) supplied application 120 running on a computing platform connected to the network 110 or from an off-net user 130 who is a subscriber of another network 140 (e.g. the Internet). The other network 140 (the foreign network) is connected to the network 110 and messages from the foreign network 130 can be forwarded to the network 110 using well known relaying, gateway and translation mechanisms as appropriate.

The MCS 200 processes the originating messages 215. Originating messages 215 that are accepted are sent on to the message server 230 as processed messages 225. Originating messages 215 that are rejected are sent to a message receptacle 240 as rejected messages 245. In an alternative embodiment the originating messages 215 that are rejected are deleted.

The MCS 200 processes the originating messages 215 based on an authenticated identity for a sender associated with the originating message 215. Authentication of the identity of the sender can be carried out by the MCS 200 or by a third party trusted by the MCS 200 to do so on its behalf. The authenticated identity of the sender can, for example, be derived from an authentication certificate (AC) that is associated with the originating message 215. The AC provides unique identification of the sender 210, the originating application 120 or the off-net user 130 as the case may be. For purposes of this description, further references to the sender 210 apply equally to the originating application 120 and the off-net user 130 except where otherwise specified.

The AC in an embodiment of the present invention is based on Public Key Infrastructure (PKI) technology defined by the International Telecommunications Union (ITU) standard 'ITU-T Recommendation X.509 (08/97)' commonly referred to as X.509v3. In alternative embodiments the AC can be based on other PKI implementations or on other similar technologies which support the creation, transmission and authentication of certificates that provide for the secure and unique identification of the certificate holder (i.e. the message sender 210) and which provide for the non-repudiation of the certificates.

A certification authority (CA) generates and issues, at its discretion, an AC upon request to an AC holder. In an embodiment of the present invention an operator of the network 110 (the network operator (NO)) acts as the CA. The NO can implement the GA function in-house or alternatively authorize one or more third parties to implement and render the CA function on the NO's behalf. The AC issued by the CA contains: a unique identifier for the AC holder (for example, in the case of the sender 210 the identifier is based on the Mobile Station Integrated Digital Services Network Number (MSISDN) of the sender's 210 terminal 218, or other similar identifier together with a carrier (e.g. NO) domain identifier), a certificate identifier, a category identifier in the case of the application 120 as the certificate holder, a validity period and other similar information that provides for the unique identification of the certificate holder, assurance of the integrity of the certificate and non-repudiation of the certificate.

In another embodiment of particular interest when the underlying messaging system is messages size constrained (e.g. Short Message Service), the AC can take the form of a more compact alternative certificate, such as the MSISDN of an SMS message sender, that still provides for the unique identification of the sender 210, assurance of the integrity of the certificate and non-repudiation of the certificate.

In an embodiment of the present invention an AC is generated and issued to each subscriber (including the sender 210) of the network 110. In addition, a VASP can request and receive an AC, from the CA, for each application (including the application 120) which the VASP wishes to offer to subscribers of the network 110 at the discretion of the CA. AC issued for applications (including the application 120) include a category identifier for the application such as: information, gaming, finance, etc. Subscribers of other networks, such as the foreign network 140, (including off-net user 130) can also request and receive an AC, from the CA, at the discretion of the CA.

Certificate holders (including the sender 210, the application 120 and the off-net user 130) sign originating messages 215 that they send to the receiver 220, and other network 110 subscribers, using the AC they were issued. In the case of the sender 210 and the off-net user 130 the AC can be imported into an email/messaging client application and automatically be included in a new email/message when created and sent

In another embodiment of the present invention, an originating message 215 contains multiple AC. This could be the case, for example, when there are multiple certificate holders who contribute to the contents of an originating message 215. Other examples include the case of a certificate holder forwarding or consolidating (daisy-chaining) signed (i.e. AC bearing) originating messages 215.

Although the foregoing specification describes the AC being issued to the sender 210 and the sender 210 adding the AC to the originating message 215, in an alternative embodiment the AC is issued to a third party who adds the AC to the originating message 215 on the sender's 210 behalf.

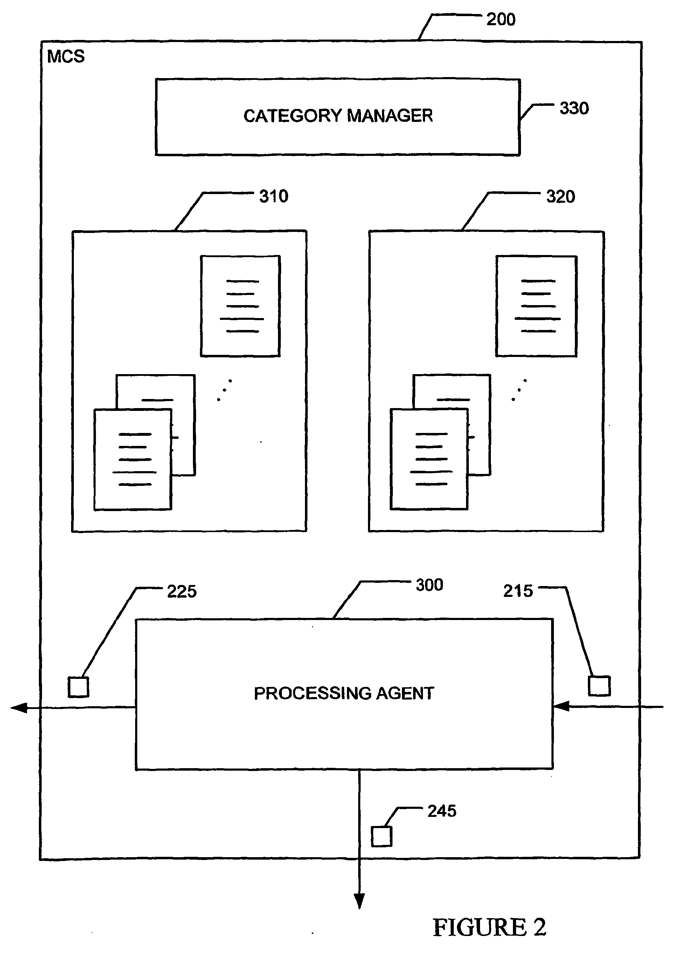

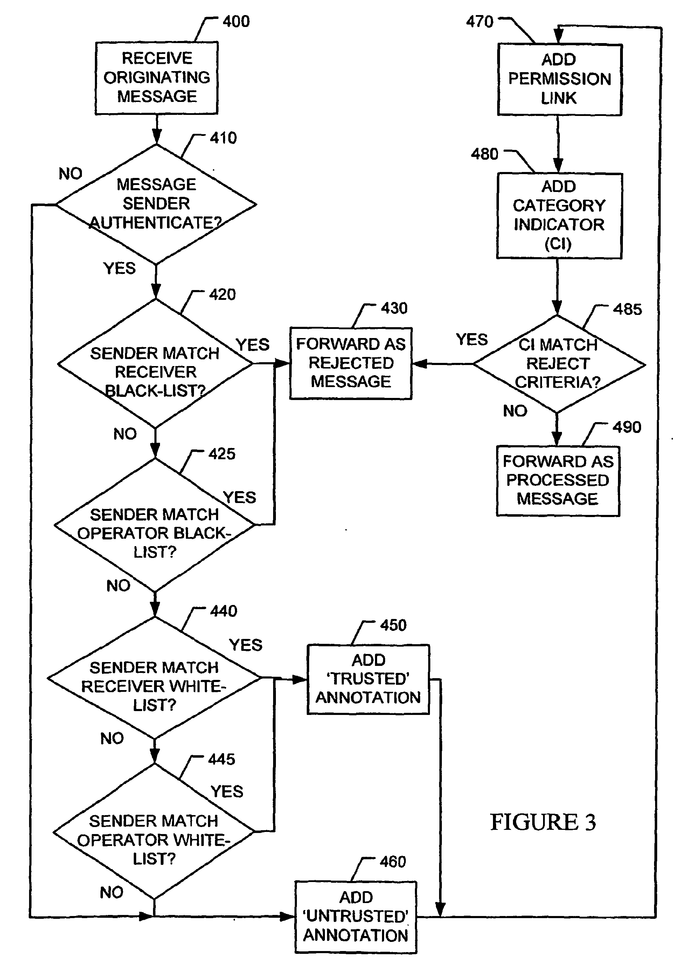

Referring now to Fig. 2 which represents an example embodiment of the MCS 200 of the present invention. A processing agent (PA) 300 comprises mechanisms for designating the trust level associated with a received message and for the disposition (forwarding) of the message based on the associated trust level. The PA receives a originating message 215 and by applying a set of filter criteria determines if the originating message 215 should be passed on as a processed message 225 or passed on as a rejected message 245. In processing the originating message 215, the processing agent 300 evaluates the filter criteria taking into consideration the identity of the sender derived from the AC associated with the message 215, a white-list associated with the receiver 220 (receiver white-list), a white-list associated with a network operator (operator white-list), a black-list associated with the receiver 220 (receiver black-list), a black-list associated with a network operator (operator black-list) and a category (if any) associated with each message. The white-lists contain the list of message senders from whom the white-list owners (the receiver or the network operator) authorizes message reception. Similarly, the black-lists contain the list of message senders from whom the black-list owners (the receiver or the network operator) disallows message reception. Further details of the operation of the filter agent 300 and the filter criteria are provided in the description of Fig. 3 below.

A white-list repository 310 provides for the creation/modification/deletion, persistent storage and access to a multitude of white-lists. Each white-list is associated with a list owner such as a subscriber of the network 110 (e.g. the receiver 220), the NO or other authorized party. The list owner can add/modify/delete entries in the associated white-list. Each entry in the white-list contains a permit identifier that can be correlated with a message sender identifier derived from a AC contained in an originating message 215. The permit identifier in a white-list entry signifies that the list owner authorizes an originating message 215 with an associated AC containing a message sender identifier that correlates to the permit identifier to be forwarded as a processed message 225 with a 'TRUSTED' annotation. The white-list repository 310 provides for the list owner to add/modify/delete entries in the associated white-list via a programmatic interface for machine to machine interaction, a Web interface for machine to human interaction via a data connection and a data terminal, a permission link mechanism included in processed messages 225 via the receiver's 220 terminal 228 or other similar interfaces.

A black-list repository 320 provides for the creation/modification/deletion, persistent storage and access to a multitude of black-lists. Each black-list is associated with a list owner such as a subscriber of the network 110 (e.g. the receiver 220), the NO or other authorized party. The list owner can add/modify/delete entries in the associated black-list. Each entry in the black-list contains a reject identifier that can be correlated with a message sender identifier derived from a AC contained in an originating message 215. The reject identifier in a black-list entry signifies that the list owner authorizes an originating message 215 with an associated AC containing a message sender identifier that correlates to the reject identifier to be forwarded as a rejected message 225. The black-list repository 310 provides for the list owner to add/modify/delete entries in the associated black-list via a programmatic interface for machine to machine interaction, a Web interface for machine to human interaction via a data connection and a data terminal, a permission link mechanism included in processed messages 225 via the receiver's 220 terminal 228 or other similar interfaces.

An originating message 215 which is passed on as a processed message 225 receives processing which comprises the addition of a trust-level annotation, a sender permission link and a category indicator to the originating message 215. The trust-level annotation is based on the identity of the sender derived from the AC and provides the receiver 220 with a simple indication as to whether the sender 210 is a known, trusted message 215 originator. The sender permission link enables the receiver 220, on receipt of the processed message 225, to instruct the MCS 200, via a notification 250 (see Fig. 1), to add the sender 210 to either the receiver white-list or to the receiver black-list associated with the receiver 220. In order to protect against 'spoofing' of the permission link instruction to the MCS 200, the permission link can incorporate a time-span limited or plain 'cookie' which is sent to the MSC 200, for authentication, with the notification 250.

A category manager 330 provides for the creation/modification/deletion, persistent storage and access to a multitude of disallowed categories lists, category information associated with message sending applications (e.g. the application 120), and message sender and network operator provided category information. Each disallowed categories list is associated with a list owner such as a subscriber of the network 110 (e.g. the receiver 220). The list owner can add/modify/delete entries in the associated disallowed categories list. In processed messages 225, the category indicator is set to a value that categorizes the processed message 225 based on the application 120, categorization information provided by the message sender (including application 120) or by the network operator. The category indicator can be used in further filtering of the message. Similar to the black-lists described above, the category indicator is compared to a disallowed categories list, belonging to the receiver 220, and the message forwarded as a rejected message 245 when the category indicator matches a reject category in the disallowed categories list or as a processed message 225 otherwise. Filtering based on the category indicator provides a mechanism for 'content-based' filtering. Content-based filtering is effective in implementing parental content control, viral protection (e.g. against illicit over-the-air provisioning configuration messages) and other similar controls and protections.

Fig. 3 represents a flow-chart of the steps in an exemplary embodiment of processing of each originating message 215 by the processing agent 300. The PA 300 executes these steps each time it receives 400 an originating message 215. The PA 300 authenticates 410 the identity of the sender of the originating message 215. If the sender 210 of the originating message 215 can not be authenticated (for example, because the message 215 does not have an AC) then an 'UNTRUSTED' annotation is added 460 to the message 215. For originating messages 215 with an authenticated identity of the sender, the receiver black-list associated with the receiver is searched 420 for an entry matching the sender 210 associated with the originating message 215. If a match in the receiver black-list is found, the originating message 215 is forwarded 430 as a rejected message 245 to, for example, a message receptacle 240. The rejected message 245 can, for example, be forwarded to a message receptacle 240 post-processing such as logging, pattern analysis, notification sending or other similar post-processes. If no match in the receiver black-list is found, the operator black-list is searched 425 for an entry matching the sender 210 associated with the AC. If a match in the operator black-list is found, the originating message 215 is forwarded 430 as a rejected message 245. In an alternative embodiment, if a match in either the receiver black-list or the operator black-list is found, the originating message 215 is deleted rather being forwarded as a rejected message 225.

If no match is in the operator black-list is found, the receiver white-list is searched 440 for an entry matching the sender 210 associated with the originating message 215. If a match in the receiver white-list is found, then an 'TRUSTED' annotation is added 450 to the message 215. If no match in the receiver white-list is found, the operator white-list is searched 445 for an entry matching the sender 210 associated with the originating message 215. If a match in the operator white-list is found, then an 'TRUSTED' annotation is added 450 to the message 215. If no match in the operator white-list is found, then an 'UNTRUSTED' annotation is added 460 to the message 215. If the originating message 215 is not forwarded as a rejected message 245, a permission link is added 470 to the originating message 215.

A category indicator based on the application 120 or on information provided by the message sender or the network operator, if any, is added 480 to the originating message 215. The category indicator is compared to a disallowed categories list associated with the receiver 220. If a match for the category indicator is found 485 in the disallowed categories list, the originating message 215 is forwarded 430 as a rejected message 245. If not forwarded as a rejected message 245, the originating message 215 together with the 'UNTRUSTED'/'TRUSTED' annotation, the permission link and the category indicator is forwarded 490 as a processed message 225.

The foregoing describes the processing of an originating message 215 with a single AC. In another embodiment, messages with multiple AC are processed through a similar set of steps with each of the multiple AC and the identity of the sender derived from them being given consideration in each step as appropriate.

Referring again to Fig. 1, the receiver 220 receives the processed message 245 from the message server 230. The receiver 220 is able to view the value-added information added to the processed message 225 by the processing agent 300 such as the 'UNTRUSTED'/'TRUSTED' annotation, permission link and category indicator. The receiver 220 uses a message client application, executing on the terminal 228, to view the processed message 220. The 'UNTRUSTED'/'TRUSTED' annotation and the category indicator are displayed in the subject line or in the body text fields of the message client application display of the message 225 or alternatively in fields specific to this information in a message client application adapted to display such fields. The permission link is displayed in the body text field of the message client application display or in field specific to this information in a message client application adapted to display such a field. When the receiver 220 invokes the permission link in the processed message 225 a notification 250 is provided to the MCS 200 indicating that the sender 210 associated with the processed message 225 is to be added either to the receiver white-list or to the receiver black-list associated with the receiver 220 as selected by the receiver 220. Processing of further originating messages 215 by the PA 200 would reflect these additions to the receiver white-list and the receiver black-list.

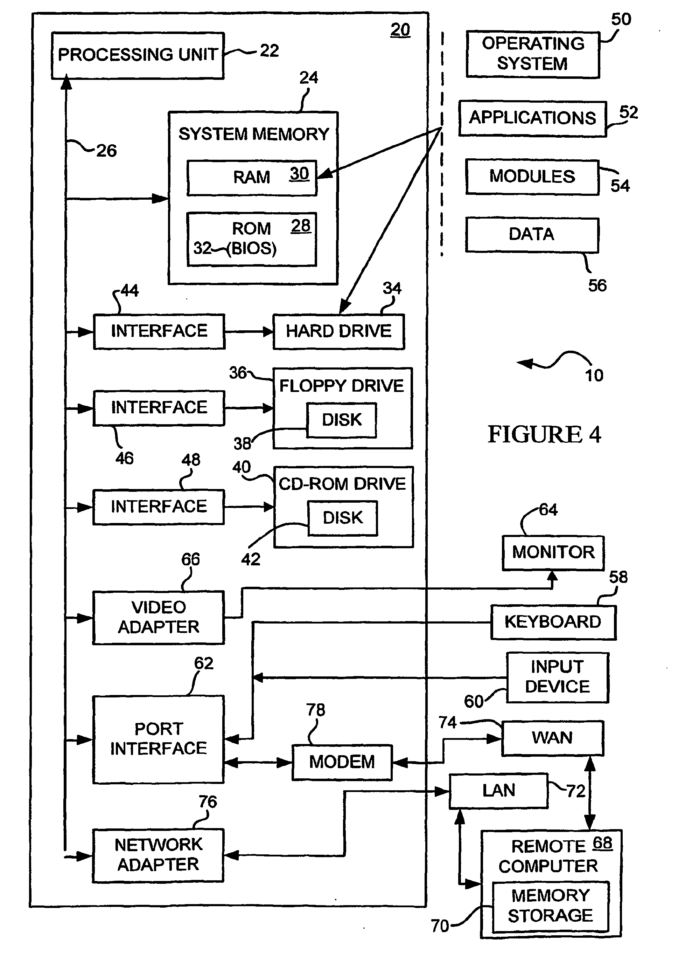

Fig. 4 and the associated description represent an example of a suitable computing environment in which the present invention may be implemented. While the invention is described in the context of implementation in the form of computer-executable instructions of a program that runs on a conventional computing platform, the invention can also be implemented in combination with other program modules.

Generally, program modules include routines, programs, components, data structures and the like that perform particular tasks or implement particular abstract data types. Further, the present invention can also be implemented using other computer system configurations, including hand-held devices, multiprocessor systems, microprocessor-based or programmable consumer electronics, personal computers, mainframe computers and the like. The invention can also be practiced in distributed computing environments where tasks are performed by remote processing devices that are linked through a communications network. In a distributed computing environment, program modules may be located in both local and remote memory storage devices.

With reference to Fig. 4, an exemplary system 10 includes a conventional computer 20, including a processing unit 22, a system memory 24, and a system bus 26 that couples various system components including the system memory 24 to the processing unit 22. The system bus 26 includes several types of bus structures including a memory bus or memory controller, a peripheral bus, and a local bus using any of a variety of conventional bus architectures (e.g., PCI, VESA, ISA, EISA etc.)

The system memory 24 includes read only memory (ROM) 28 and random access memory (RAM) 30. A basic input/output system (BIOS) 32, containing the basic routines that help to transfer information between elements within the computer 20, such as during start-up, is stored in the ROM 28. The computer 20 also includes a hard disk drive 34, magnetic disk drive 36 (to read from and write to a removable disk 38), and an optical disk drive 40 (for reading a CD-ROM disk 42 or to read from or write to other optical media). The drives 34, 36 and 40 are connected to the system bus 26 by interfaces 44, 46 and 48, respectively.

The drives 34, 36 and 40 and their associated computer-readable media (38, 42) provide nonvolatile storage of data, data structures, and computer-executable instructions for the computer 20. The storage media of Fig. 4 are merely examples and it is known by those skilled in the art to include other types of media that are readable by a computer (e.g., magnetic cassettes, flash memory cards, digital video disks, etc.).

A number of program modules may be stored in the drives 34, 36 and 40 and the RAM 30, including an operating system 50, one or more application programs 52, other program modules 54 and program data 56. A user may enter commands and information into the computer 20 through a keyboard 58 and an input device 60 (e.g., mouse, microphone, joystick, game pad, satellite dish, scanner etc.) These devices (58 and 60) are connected to the processing unit 22 through a port interface 62 (e.g., serial port, parallel port, game port, universal serial bus (USB) etc.) that is coupled to the bus 26. A monitor 64 or other type of display device is also connected to the bus 26 through an interface 66 (e.g., video adapter).

The computer 20 may operate in a networked environment using logical connections to one or more remote computers, such as remote computer 68. The remote computer 68 may be a server, a router, a peer device or other common network node, and typically includes many or all of the elements described in relation to the computer 20, although for simplicity only a memory storage device 70 is shown. The logical connections shown in Fig. 4 include a local area network (LAN) 72 and a wide area network (WAN) 74. Such networking environments are commonly used in offices, enterprise-wide computer networks, intranets and the Internet.

When used in a LAN networking environment, the computer 20 is connected to the LAN 72 through a network interface or adapter 76. When used in the WAN networking environment, the computer 20 typically includes a modem 78 or other means for establishing communications over the WAN 74, such as the Internet. The modem 54, which may be internal or external, is connected to the bus 26 through the port interface 62. In a networked environment, program modules depicted relative to the computer 20, or portions thereof, may be stored in the remote memory storage device 70.

It will be apparent to one skilled in the art that numerous modifications and departures from the specific embodiments described herein may be made without departing from the spirit and scope of the present invention.

### Industrial Applicability

The present invention is applicable in the field of communications networks by, for example, a network operate or another value added service provider to processing of messages from a sender to a receiver for the purpose of controlling the disposition of potential junk messages.

## Claims

1. A method of processing a message (215) sent by a sender (210), via a terminal device (218) to a receiver (220) in a communication network (110), comprising the steps of:
a) generating an authentication certificate, the authentication certificate being based on an identifier of the terminal device (218),
b) signing the message (215) using the authentication certificate,
c) authenticating the sender (218) based on the authentication certificate,
d) designating the message (215) as rejected, if the sender (210) matches a rejection criteria,
e) designating the message (215) as trusted when the sender (210) passes authentication,
f) designating the message (215) as untrusted when the sender (210) fails authentication,
g) forwarding the designated rejected message (245) to a message receptacle (240),
h) forwarding the designated trusted message for delivery to the receiver (220); and
i) forwarding the designated untrusted message for delivery to the receiver (220).

2. The method of claim 1, further comprising:
adding a trusted annotation to the designated trusted message before forwarding for delivery to the receiver; wherein the annotation is viewable by the receiver upon receipt of the message

3. The method of claim 1, further comprising:
adding an untrusted annotation to the designated untrusted message before forwarding for delivery to the receiver; wherein the the annotation is viewable by the receiver upon receipt of the message.

4. The method of claim 1, further comprising:
defining the rejection criteria as a function of the receiver.

5. The method of claim 1, further comprising:
defining the acceptance criteria as a function of the receiver.

6. The method of claim 1, further comprising:
adding a permission link to the message before forwarding the message for delivery to the receiver (220), the permission link enabling the receiver (220) to add the sender (210) to the rejection criteria or to the acceptance criteria.

7. The method of claim 1 further comprising:
adding a category indicator to the message, wherein the category indicator is determined based on the identity of the sender, information associated with the message provided by the sender, or information provided by a network operator.

8. The method of claim 7, further comprising:
designating the message as rejected when the category indicator matches a category rejection criteria.

9. The method of claim 8, further comprising: defining the category rejection criteria as a function of the receiver (220).

10. The method of one of the claims 1 to 9, **characterized in that**
the sender (210) is an application (120) and the terminal device (218) is a computing platform on which the application (120) executes.

11. The method of one of the claims 1 to 9 **characterized in that** the sender (210) is an off-net user (130) who is a subscriber of another network (140).

12. The method of one of the claims 1 to 11, **characterized in that**
the authentication certificate is generated by a certification authority.

13. The method of claim 12 **characterized in that** the certification authority is the network operator of the communication network (110).

14. The method of one of the claims 1 to 13, **characterized in that**
the authentication certificate is issued to the sender (210).

15. The method of one of the claims 1 to 13 **characterized in that**
the authentication certificate is issued to a third party, which adds the authentication certificate to the message (215).

## Patentansprüche

1. Verfahren zur Verarbeitung einer von einem Absender (210) versendeten Nachricht (215) über ein Endgerät (218) an einen Empfänger (220) in einem Kommunikationsnetzwerk (110), wobei das Verfahren folgende Schritte umfasst:
a) Erzeugen eines Authentifizierungszertifikats, wobei das Authentifizierungszertifikat auf einem Identifikator des Endgeräts (218) basiert,
b) Signieren der Nachricht (215) mit Hilfe des Authentifizierungszertifikats,
c) Authentifizierung des Absenders (210) auf Basis des Authentifizierungszertifikats,
d) Bezeichnen der Nachricht (215) als abgelehnt, wenn der Absender (210) einem Ablehnungskriterium entspricht,
e) Bezeichnen der Nachricht (215) als vertrauenswürdig, wenn der Absender (210) die Authentifizierung besteht,
f) Bezeichnen der Nachricht (215) als nicht vertrauenswürdig, wenn der Absender (210) die Authentifizierung nicht besteht,
g) Weiterleiten der als abgelehnt bezeichneten Nachricht (245) an einen Nachrichtensammler (240),
h) Weiterleiten der als vertrauenswürdig bezeichneten Nachricht zur Lieferung an den Empfänger (220); und
i) Weiterleiten der als nicht vertrauenswürdig bezeichneten Nachricht zur Lieferung an den Empfänger (220).

2. Verfahren nach Anspruch 1, ferner umfassend:
Hinzufügen eines "Vertrauenswürdig"-Vermerks an die als vertrauenswürdig bezeichnete Nachricht vor deren Weiterleitung zur Lieferung an den Empfänger, wobei der Vermerk für den Empfänger nach Empfang der Nachricht sichtbar ist.

3. Verfahren nach Anspruch 1, ferner umfassend:
Hinzufügen eines "Vertrauensunwürdig"-Vermerks an die als nicht vertrauenswürdig bezeichnete Nachricht vor deren Weiterleitung zur Lieferung an den Empfänger, wobei der Vermerk für den Empfänger nach Empfang der Nachricht sichtbar ist.

4. Verfahren nach Anspruch 1, ferner umfassend:
Definieren der Ablehnungskriterien als Funktion des Empfängers.

5. Verfahren nach Anspruch 1, ferner umfassend:
Definieren der Annahmekriterien als Funktion des Empfängers.

6. Verfahren nach Anspruch 1, ferner umfassend:
Hinzufügen einer Erlaubnisverknüpfung zur Nachricht vor deren Weiterleitung zur Lieferung an den Empfänger (220), wobei die Erlaubnisverknüpfung dem Empfänger (220) ermöglicht, den Absender (210) zu den Ablehnungskriterien oder den Annahmekriterien hinzuzufügen.

7. Verfahren nach Anspruch 1, ferner umfassend:
Hinzufügen eines Kategorie-Indikators zu der Nachricht, wobei die Ermittlung des Kategorie-Indikators auf der Identität des Absenders, auf Informationen des Absenders in Verbindung mit der Nachricht oder auf Informationen eines Netzwerkbetreibers beruht.

8. Verfahren nach Anspruch 7, ferner umfassend:
Bezeichnen der Nachricht als abgelehnt, wenn der Kategorie-Indikator einem Kategorie-Ablehnungskriterium entspricht.

9. Verfahren nach Anspruch 8, ferner umfassend:
Definieren des Kategorie-Ablehnungskriteriums als Funktion des Empfängers (220).

10. Verfahren nach einem der Ansprüche 1 bis 9, **dadurch gekennzeichnet, dass** der Absender (210) eine Anwendung (120) und das Endgerät (218) eine Computerplattform ist, auf der die Anwendung (120) ausgeführt wird.

11. Verfahren nach einem der Ansprüche 1 bis 9, **dadurch gekennzeichnet, dass** der Absender (210) ein Offnet-Benutzer (130) ist, der Teilnehmer eines anderen Netzwerks (140) ist.

12. Verfahren nach einem der Ansprüche 1 bis 11, **dadurch gekennzeichnet, dass** das Authentifizierungszertifikat von einer Zertifizierungsautorität generiert wird.

13. Verfahren nach Anspruch 12, **dadurch gekennzeichnet, dass** die Zertifizierungsautorität der Netzwerkbetreiber des Kommunikationsnetzwerks (110) ist.

14. Verfahren nach einem der Ansprüche 1 bis 13, **dadurch gekennzeichnet, dass** das Authentifizierungszertifikat an den Absender (210) ausgegeben wird.

15. Verfahren nach einem der Ansprüche 1 bis 13, **dadurch gekennzeichnet, dass** das Authentifizierungszertifikat an einen Dritten ausgegeben wird, der das Authentifizierungszertifikat an die Nachricht (215) anhängt.

## Revendications

1. Procédé de traitement d'un message (215) envoyé par un expéditeur (210), par l'intermédiaire d'un dispositif de terminal (218), à un destinataire (220) dans un réseau de communication (110), comprenant les étapes consistant à :
a) générer un certificat d'authentification, ledit certificat d'authentification étant fondé sur un identificateur du dispositif de terminal (218),
b) signer le message (215) en utilisant le certificat d'authentification,
c) authentifier l'expéditeur (210) sur la base du certificat d'authentification,
d) désigner le message (215) comme étant rejeté, si l'expéditeur (210) correspond à un critère de rejet,
e) désigner le message (215) comme étant de confiance lorsque l'expéditeur (210) subit avec succès l'authentification,
f) désigner le message (215) comme n'étant pas de confiance lorsque l'expéditeur (210) échoue à l'authentification,
g) retransmettre le message rejeté désigné (245) à un réceptacle de messages (240),
h) retransmettre le message de confiance désigné en vue de la délivrance au destinataire (220), et
i) retransmettre le message qui n'est pas de confiance désigné en vue de la délivrance au destinataire (220).

2. Procédé selon la revendication 1, comprenant en outre :
l'ajout d'une annotation de confiance au message de confiance désigné avant la retransmission en vue d'une délivrance au destinataire, où l'annotation est visible par le destinataire lors de la réception du message.

3. Procédé selon la revendication 1, comprenant en outre:
l'ajout d'une annotation de non-confiance au message qui n'est pas de confiance désigné avant la retransmission en vue d'une délivrance au destinataire, où l'annotation est visible par le destinataire lors de la réception du message.

4. Procédé selon la revendication 1, comprenant en outre :
la définition de critères de rejet en fonction du destinataire.

5. Procédé selon la revendication 1, comprenant en outre:
la définition de critères d'acceptation en fonction du récepteur.

6. Procédé selon la revendication 1, comprenant en outre :
l'ajout d'un lien d'autorisation au message avant la retransmission du message en vue de la délivrance au destinataire (220), le lien d'autorisation permettant au destinataire (220) d'ajouter l'expéditeur (210) aux critères de rejet ou aux critères d'acceptation.

7. Procédé selon la revendication 1, comprenant en outre :
l'ajout d'un indicateur de catégorie au message, où l'indicateur de catégorie est déterminé sur la base de l'identité de l'expéditeur, d'informations associées au message fournies par l'expéditeur ou d'informations fournies par un opérateur du réseau.

8. Procédé selon la revendication 7 , comprenant en outre :
la désignation du message comme étant rejeté lorsque l'indicateur de catégorie correspond à un critère de rejet de catégorie.

9. Procédé selon la revendication 8 comprenant en outre: la définition du critère de rejet de catégorie en fonction du destinataire (220).

10. Procédé selon l'une des revendications 1 à 9, **caractérisé en ce que**
l'expéditeur (210) est une application (120) et le dispositif de terminal (218) est une plate-forme de calcul sur laquelle s'exécute l'application (120).

11. Procédé selon l'une des revendications 1 à 9, **caractérisé en ce que** l'expéditeur (210) est un utilisateur hors réseau (130) qui est un abonné d'un autre réseau (140).

12. Procédé selon l'une des revendications 1 à 11, **caractérisé en ce que** le certificat d'authentification est généré par une autorité de certification.

13. Procédé selon la revendication 12, **caractérisé en ce que** l'autorité de certification est l'opérateur de réseau du réseau de communication (110).

14. Procédé selon l'une des revendications 1 à 13, **caractérisé en ce que** le certificat d'authentification est délivré à l'expéditeur (210).

15. Procédé selon l'une des revendications 1 à 13, **caractérisé en ce que** le certificat d'authentification est délivré à une tierce partie, qui ajoute le certificat d'authentification au message (215).
